# EUROPEAN PATENT SPECIFICATION

(11) **EP 2 305 606 B1**
(45) Date of publication and mention of the grant of the patent: **02.04.2014**
(21) Application number: 09803118.0
(22) Date of filing: 24.07.2009
(51) Int. Cl.: C01F 17/00, C09K 3/14

(54) **METHOD FOR PREPARING CERIUM CARBONATE**
VERFAHREN ZUR HERSTELLUNG VON CERIUMCARBONAT
PROCÉDÉ DE PRÉPARATION DE CARBONATE DE CÉRIUM

(30) Priority: 29.07.2008 KR 20080074244
(43) Date of publication of application: 06.04.2011
(73) Proprietor: LG Chem, Ltd., Youngdungpo-gu Seoul 150-721 (KR)
(72) Inventor: CHOI, Sang-Soon, Samcheok-si Gangwon-do 245-150 (KR); JUNG, Sang-Yun, Daejeon 301-010 (KR); KIM, Jeong-Kyu, Seoul 156-020 (KR); KIM, Yeong-Dae, Daejeon 305-755 (KR)
(74) Representative: Goddar, Heinz J.
(86) International application number: PCT/KR2009/004144
(87) International publication number: WO 2010/013913

(56) References cited:
- WO-A1-2007/035034
- WO-A1-2007/055523
- JP-A- 2000 159 521
- JP-A- 2002 265 932
- JP-A- 2008 094 698
- KR-A- 20070 032 907

## Description

### [TECHNICAL FIELD]

The present invention relates to a method for preparing cerium carbonate, particularly to a method for preparing cerium carbonate that can improve yield or productivity of cerium carbonate.

### [PRIOR ART]

Cerium oxide powder is a high functional ceramic material widely used as a catalyst, a phosphor, cosmetics, an abrasive, etc., and it has been recently spotlighted as an abrasive for a CMP (Chemical Mechanical Polishing) process in the field of semiconductor device.

In general, the cerium oxide powder can be prepared by a liquid-phase method, a gas-phase method or a solid-phase method.

According to the liquid-phase method, a pH control agent such as ammonia is added to starting material, i.e., trivalent or tetravalent cerium salt to directly prepare cerium oxide from cerium salt. This method is economical because raw material cost and equipment cost is comparatively low. Nevertheless, it is difficult to control particle growth because a reaction between starting materials easily occurs from nucleation stage. And, if fine cerium oxide prepared by the liquid-phase method is used as an abrasive, a polishing rate is low thus unfavorable for a continuous process to decrease productivity.

According to the gas-phase method, a cerium metal salt precursor is vaporized and then bonded with oxygen, etc. to directly prepare cerium oxide. This method includes flame combustion decomposition, gas condensation decomposition, plasma vaporization, laser vaporization, etc. However, this method has difficulty in terms of massification because costs of the cerium metal salt precursor and equipment are high, and the study thereof is still under progress.

Meanwhile, according to the solid-phase method, precursor material is fired at high temperature to prepare cerium oxide. As the precursor, cerium carbonate is widely used, and the physical properties and shape of cerium oxide can be varied depending on the kind and shape of cerium carbonate. Thus, in order to control the physical properties (for example, abrasiveness of cerium oxide, etc,) or shape, etc. of cerium oxide, a method for preparing cerium carbonate that can easily control the kind or shape of cerium carbonate is required.

However, a method for preparing cerium carbonate having controlled kind or shape by a simplified process has not been adequately developed yet, and particularly, there is a continued demand for a method capable of preparing hexagonal cerium carbonate by more simplified process.

Moreover, a method for preparing cerium carbonate known so far has a disadvantage of insufficient yield or productivity, and in case cerium carbonate with a specific shape or crystal structure such as hexagonal structure is to be obtained, a high pressure reaction is required, which involves dangerousness.

WO 2007/055523, an earlier application of the applicant, discloses a method for preparing cerium carbonate powder by mixing a cerium precursor solution with a carbonate precursor solution and subjecting the mixture solution to a precipitation reaction wherein the concentration of cerium in the cerium precursor solution and the molar concentration ratio of the cerium precursor to the carbonate precursor are falling into specific ranges and wherein the cerium precursor solution contains an additive from a specific list.

### [DETAILED DESCRIPTION OF THE INVENTION]

### [TECHNICAL OBJECT]

The present invention provides a method for preparing cerium carbonate that can improve yield or productivity of cerium carbonate and easily control the crystal structure or shape thereof.

### [TECHNICAL SOLUTION]

The present invention provides a method for preparing cerium carbonate comprising the steps of: mixing a cerium precursor and urea; and, elevating the temperature of the mixture to 50 ~ 250°C under solvent free condition to react the cerium precursor with urea.

A method for preparing cerium carbonate according to embodiments of the invention will now be explained.

According to one embodiment of the invention, a method for preparing cerium carbonate comprising the steps of: mixing a cerium precursor and urea; and, elevating the temperature of the mixture to 50 - 250°C under solvent free condition to react the cerium precursor with urea is provided.

In the method for preparing cerium carbonate, the term "solvent free condition" means that during the process of mixing and reacting the cerium precursor and urea, a solvent, an aqueous solvent or other liquid phase reaction medium for dissolving the reactants is not added. However, even under such "solvent free condition", a trace amount of water vapor derived from air, etc. can be comprised in the mixture of the cerium precursor and urea, and in case an additive such as nitric acid, etc. is added to the reactants, a small amount of a solvent or an aqueous solvent for dissolving the additive can be comprised. Thus, the term "solvent free condition" may include the case wherein a small amount, i.e., 20 wt% or less, preferably 10 wt% or less, most preferably 5 wt% or less of a solvent, an aqueous solvent or other liquid phase reaction medium is comprised in the reaction mixture comprising the reactants and optionally an additive such as nitric acid, etc., as well as the case wherein a solvent, an aqueous solvent or other liquid phase reaction medium is not comprised in the reaction mixture, during the process for mixing and reacting the cerium precursor and urea.

In the method for preparing cerium carbonate, after mixing the reactants, cerium precursor and urea, the temperature of the reaction mixture is elevated to 50 ~ 250°C under solvent free condition, and the reaction between the cerium precursor and urea proceeds. At this time, for reaction under the solvent free condition, the cerium precursor and urea may be mixed in a solid state. By elevating the temperature, a part of the cerium precursor or urea may be molten to act as a reaction medium, thereby proceeding the reaction, wherein an additional solvent, aqueous solvent or other liquid phase reaction medium is not substantially employed.

As result of the experiments of the inventors, it was confirmed that if the reaction between the cerium precursor and urea is conducted by melting of the reactants under solvent free condition, cerium carbonate can be prepared with high yield by the reaction therebetween. It is believed that since a separate reaction medium such as a solvent or an aqueous solvent is not substantially employed, contact between the reactants becomes more frequent in the same volume to promote the reaction. And, since the melt of the reactants may act as a kind of a reaction medium, a separate solvent or aqueous solvent is not substantially employed and any problems caused by using a separate reaction medium such as waste water treatment, etc. does not occur.

And, according to the above method, since the amount of reaction medium decreases, a larger amount of the reactants, cerium precursor and urea can be reacted in the same volume of a reactor, thereby preparing cerium carbonate with high productivity.

In addition, according to the method for preparing cerium carbonate, cerium carbonate can be prepared with easily controlling the crystal structure, shape or kind thereof. The non-limitative reason is as follows.

Previously, in general, cerium carbonate has been prepared in an aqueous solution state wherein a cerium precursor and urea are dissolved in an aqueous solvent such as water, by elevating the temperature of the reaction mixture of an aqueous solution to a determined temperature. However, in order to obtain cerium carbonate with a specific crystal structure, for example, hexagonal crystal structure, a reaction should be conducted at high temperature exceeding 100°C, for example, about 180°C. And, since a boiling point of the aqueous solvent employed as a reaction medium is 100°C, in order to obtain cerium carbonate with a specific crystal structure, for example, hexagonal crystal structure, by conducting a reaction at high temperature while inhibiting evaporation of the reaction medium, the reaction should be conducted under high pressure, for example, 40bar or more and up to 100bar maximum. Especially, since the reaction between the cerium precursor and urea begins when urea is decomposed at an elevated temperature, a reaction pressure may further increase by a gas pressure due to the decomposition of urea.

The reaction under high pressure may involve dangerousness, and decrease economical efficiency because expensive high pressure equipment is required. For this reason, previously, it has been very difficult to selectively prepare cerium carbonate with a specific crystal structure, for example, hexagonal crystal structure, and economical efficiency has also been very low.

Meanwhile, according to one embodiment of the invention, since a reaction may be conducted by elevating the temperature of a solid mixture of cerium precursor and urea to melt them, without substantially using a separate reaction medium such as an aqueous solvent, the reaction needs not to be conducted under high pressure. Specifically, since the reactants such as urea have very high boiling point, it may not be substantially required to increase a pressure for increasing a reaction temperature, at a temperature below the carbonization temperature of the reactants. Therefore, since a reaction can be conducted by elevating the temperature of the reaction mixture to 100°C or more even under atmospheric pressure, cerium carbonate with a specific crystal structure, for example, hexagonal crystal structure can be easily selectively prepared.

Therefore, according to the method of the invention, cerium carbonate with a desired crystal structure, kind or shape, etc. can be selectively and effectively obtained by easily controlling reaction conditions of the cerium precursor and urea (for example, reaction temperature, equivalence ratio of reactants or reaction time, etc.) even under low pressure such as 1~2 atm. And, since there is no need to use a high pressure reactor during the process, economical efficiency can be improved, and there is no substantial dangerousness due to a high pressure reaction

Meanwhile, the cerium carbonate prepared by the above method can be classified into cerium carbonate with orthorhombic or hexagonal crystal structure depending on the amounts of the carbonate functional group and absorbed hydroxyl group. By the above-described method, cerium carbonate with these crystal structures can be prepared with high yield and productivity, and cerium carbonate with a desired crystal structure, for example, hexagonal crystal structure can be easily selectively prepared. Thereby, cerium carbonate can be selectively prepared with easily controlling the crystal structure, kind or shape thereof, and cerium oxide with desired physical properties (for example, desired polishing property or shape) can be easily obtained therefrom.

In the method for preparing cerium carbonate of the invention, the cerium precursor employed as a reactant may include nitrate, sulfate, chloride or ammonium salt of cerium, and other various compounds comprising cerium with maintaining a solid state at room temperature (for example, -20~40°C) can be used as the cerium precursor without specific limitations. For examples, a cerium salt comprising trivalent or tetravalent cerium can be used as the cerium precursor, and concrete examples thereof include cerium nitrate (Ce(NO₃)₃·xH₂O), cerium sulfate (Ce(SO₄)₃·xH₂O or Ce(SO₄)₂·xH₂O), cerium chloride (CeCl₃·xH₂O) or diammonium cerium nitrate (Ce(NH₄)₂(NO₃)₆ or Ce(NH₄)₂(NO₃)₅·xH₂O) (wherein, x is a constant of from 0 to 10).

And, urea(CO(NH₂)₂) which reacts with the cerium precursor may act as a carbon source providing carbonate ion(CO₃²⁻) to function as a pH control agent.

Meanwhile, in the method of the invention, the cerium precursor and urea may be mixed in an equivalence ratio of 1 : 0.5 - 1 : 10. If urea is used in an equivalence ratio less than 0.5 for the cerium precursor, yield of cerium carbonate may decrease, and if it is used in an equivalence ratio exceeding 10 for the cerium precursor, a large amount of residual reactants may be generated to decrease purity of cerium carbonate.

In the method of the invention, cerium carbonate with a desired crystal structure, kind or shape can be easily selectively prepared by controlling the equivalence ratio of the cerium precursor and urea within the range of 1 : 0.5 - 1 : 10. Specifically, cerium carbonate can be divided into those having orthorhombic and hexagonal crystal structures. If the equivalence ratio of the cerium precursor and urea is controlled to 1 : 0.5 or more and less than 1 : 1.5, cerium carbonate with orthorhombic crystal structure predominantly forms, and thus cerium carbonate comprising 50 vol% or more of cerium carbonate with orthorhombic crystal structure in the total cerium carbonate can be prepared. And, by controlling the equivalence ratio of the cerium precursor and urea to 1 : 1.5 or more and 1 : 10 or less, and preferably controlling reaction temperature as will be explained to 140°C or more, cerium carbonate with hexagonal crystal structure may predominantly form to prepare cerium carbonate comprising 50 vol% or more of hexagonal cerium carbonate.

And, the reaction between the cerium precursor and urea may be conducted at an elevated temperature of 50 ~ 250°C. If an additive such as nitric acid is not separately added, the reaction may be preferably conducted at an elevated temperature of 80 ~ 250°C.

The cerium carbonate production reaction between the cerium carbonate and urea is assumed to comprise the steps of forming carbonate ion by decomposition of urea, and forming cerium carbonate by the reaction of the carbonate ion and the cerium precursor. Since the decomposition of urea actively occurs at approximately 80°C or more, yield of cerium carbonate can be increased by controlling the reaction temperature to 80 ~ 250°C. However, if the reaction temperature is excessively elevated, gas pressure due to the decomposition of urea excessively increases, which is not preferable in terms of a reaction pressure and does not significantly increase yield of cerium carbonate.

And, cerium carbonate with a desired crystal structure, kind or shape can be easily selectively prepared by controlling the reaction temperature of the cerium precursor and urea within the temperature range of 80~250°C. Specifically, if the reaction temperature is controlled to 80°C or more and less than 140°C, cerium carbonate with orthorhombic crystal structure predominantly forms and thus cerium carbonate comprising 50 vol% or more of orthorhombic cerium carbonate can be prepared. And, if the reaction temperature is controlled to 140°C or more and 250°C or less, and preferably the above-described equivalence ratio of the cerium precursor and urea is controlled to 1 : 1.5 or more and 1 : 10 or less, cerium carbonate comprising 50 vol% or more of hexagonal cerium carbonate can be prepared.

And, in the method, a reaction time of the cerium precursor and urea may be controlled to 0.5~60 hours. Within the reaction time, reaction degree of the cerium precursor and urea can be appropriately controlled to prepare cerium carbonate with high yield. The reaction time can be controlled so as to correspond to the equivalence ratio of cerium precursor and urea or reaction temperature, etc., considering the crystal structure, kind or shape of cerium carbonate to be obtained.

Cerium carbonate with a desired crystal structure, kind or shape can be selectively prepared by controlling the reaction time of the cerium precursor and urea within the above described time. Specifically, if the reaction time is controlled to 0.5 hours or more and less than 3 hours, cerium carbonate with orthorhombic crystal structure predominantly forms and thus cerium carbonate comprising 50 vol% or more of orthorhombic cerium carbonate can be prepared, and if it is controlled to 3-60 hours, cerium carbonate comprising 50 vol% or more of hexagonal cerium carbonate can be prepared. In order to predominantly prepare hexagonal cerium carbonate, it is most preferable to control the reaction time to 3~60 hours, the equivalence ratio of the cerium precursor and urea to 1 : 1.5 or more, and the reaction temperature to 140°C or more.

Meanwhile, in the method of preparing cerium carbonate, the reaction between the cerium precursor and urea may be conducted in the presence of nitric acid. As results of the experiments of the inventors, it was confirmed that by the addition of the nitric acid, an urea decomposition initiation temperature may decrease to further lower a reaction temperature, and cerium carbonate can be prepared with more uniform size thus facilitating control of the shape or physical properties of cerium carbonate.

The nitric acid, in order to be added easily and uniformly to a solid state reaction mixture comprising cerium precursor and urea, can be added in an aqueous solution state where it is dissolved in a small amount of an aqueous solvent. However, the aqueous solvent is only a small amount of a medium for dissolving only nitric acid, and it is not employed in an amount such that it may act as a reaction medium for cerium precursor and urea.

The nitric acid may be added such that the equivalence ratio of urea : nitric acid may be 1 : 4 or less. If the amount of nitric acid exceeds the above range, the produced cerium carbonate may be redissolved in nitric acid to fail to maintain crystal, thus lowering yield of cerium carbonate, and making it difficult to prepare cerium carbonate with a desired crystal structure or shape.

In the method of the invention, if nitric acid is used, it is preferable to conduct a reaction between the cerium precursor and urea at an elevated temperature of 50 ~ 250°C. Since urea may be decomposed at a temperature lower than its decomposition temperature by the addition of nitric acid, cerium carbonate may be obtained with high yield within the above reaction temperature range. However, if the reaction temperature is excessively elevated, it may not be preferable in terms of a reaction pressure.

And, if nitric acid is used, cerium carbonate with a desired crystal structure, kind or shape can be selectively prepared by controlling the reaction temperature within the range of 50 ~ 250°C. Specifically, if the reaction temperature is controlled to 50°C or more and less than 100°C, cerium carbonate with orthorhombic crystal structure predominantly forms and thus cerium carbonate comprising 50 vol% or more of orthorhombic cerium carbonate can be prepared, and if the reaction temperature is controlled to 100°C or more and 250°C or less, cerium carbonate comprising 50 vol% or more of hexagonal cerium carbonate can be prepared. By controlling the equivalence ratio of cerium precursor and urea, for example, to 1 : 1.5 or more, and the reaction time, for example, to 3 hours or more, simultaneously with controlling the reaction temperature, the hexagonal cerium carbonate can be obtained with high selectivity.

Meanwhile, it is preferable to further conduct separation; washing; and drying for the cerium carbonate prepared by the above-described method. The separation may be conducted by any separation method commonly used in the art, for example, separation by cooling, separation by filtration or centrifugation. The washing may be preferably conducted using DI water such that ion value may be 3 mS or less. Thereby, in case cerium oxide is to be obtained by firing cerium carbonate, crystal size of powder after firing can be appropriately controlled and problems caused by pulverization can be prevented. The drying may be preferably conducted at approximately 60°C or more for 24 hours, but the time may be varied depending on the drying temperature.

According to the above described method for preparing cerium carbonate, cerium carbonate can be obtained with high yield and productivity. And, cerium carbonate with a desired crystal structure, kind or shape, for example, orthorhombic or hexagonal cerium carbonate can be easily selectively obtained.

Since the crystal structure, etc. of the cerium carbonate powder can be easily controlled during the preparation process to exhibit desired crystal structure, shape or kind, cerium oxide powder which satisfies desired physical properties and shape can be easily obtained from the cerium carbonate powder. For example, cerium oxide powder which satisfies physical properties and shape as a CMP abrasive can be easily obtained from the cerium carbonate powder prepared by the above method.

According to one embodiment, a method for preparing cerium oxide powder comprising the step of firing the cerium carbonate powder is provided.

The firing temperature and method can be selected from common temperature and method for preparing cerium oxide known in the art. Specifically, the firing temperature may be controlled within the range of from 300°C to 1500°C, preferably from 400°C to 1000°C, and the firing may be conducted for 30 minutes to 4 hours. If the firing temperature is too low or the firing time is too short, the crystallinity of the cerium oxide powder may decrease, and thus the cerium oxide powder may not exhibit appropriate polishing rate for use as a CMP abrasive, etc. And, if the firing temperature is too high or the firing time is too long, the crystallinity of the cerium oxide powder is excessively high, and thus, if used as a CMP abrasive, etc., scratch may be caused on the polished surface.

The desired physical properties of the cerium oxide powder obtained by the above method may be controlled, for example, so as to exhibit desirable polishing performance when used as a CMP abrasive, by controlling the crystal structure, shape or kind, or volume ratio of the precursor, cerium carbonate powder. Specifically, cerium oxide powder prepared from the predominant precursor of hexagonal cerium carbonate powder exhibits high polishing rate for a silicon oxide film and low polishing rate for a silicon nitride film, thus showing excellent polishing selectivity between a silicon oxide film and a silicon nitride film, and excellent global planarization. To the contrary, cerium oxide powder prepared from predominant precursor of orthorhombic cerium carbonate powder may exhibit properties favorable for polishing a silicon nitride film having high strength.

### [BRIEF DESCRIPTION OF THE DRAWINGS]

Fig. 1 shows XRD analysis results of cerium carbonate prepared in Examples 1~6 and Comparative Example 1.
Fig. 2 shows SEM analysis result of hexagonal cerium carbonate prepared in Example 1.
Fig. 3 shows SEM analysis result of hexagonal cerium carbonate prepared in Example 2.
Fig. 4 shows SEM analysis result of hexagonal cerium carbonate prepared in Example 3.
Fig. 5 shows SEM analysis of hexagonal cerium carbonate prepared in Example 4.
Fig. 6 shows SEM analysis result of orthorhombic cerium carbonate prepared in Example 5.
Fig.7 shows XRD analysis result of orthorhombic/hexagonal cerium carbonate prepared in Example 7.
Fig. 8 shows XRD analysis result of orthorhombic/hexagonal cerium carbonate prepared in Example 8.
Fig. 9 shows SEM analysis of orthorhombic cerium carbonate prepared in Comparative Example 1.
Fig. 10 shows SEM analysis of orthorhombic cerium carbonate prepared in Comparative Example 2.
Fig. 11 shows XRD analysis result of cerium oxide prepared according to Example 9, using cerium carbonate prepared in Example 1.
Fig. 12 shows XRD analysis result of cerium oxide prepared according to Example 9, using cerium carbonate prepared in Example 5.

### [EXAMPLES]

The present invention will be explained in detail with reference to the following preferable examples. However, these examples are only to illustrate the invention and the scope of the invention is not limited thereto.

### <Preparation of cerium carbonate>

### Example 1

Under atmospheric pressure(1atm) and room temperature(RT), 43.4g of cerium nitrate, 18g of urea(3 equivalents) were mixed, and the temperature of the reaction mixture was elevated to 140°C and then a reaction was conducted for 16 hours while maintaining the temperature. Then, the reaction mixture was slowly cooled and diluted with water to complete the reaction, and then, dried under vacuum of 80°C for 24 hours to prepare cerium carbonate.

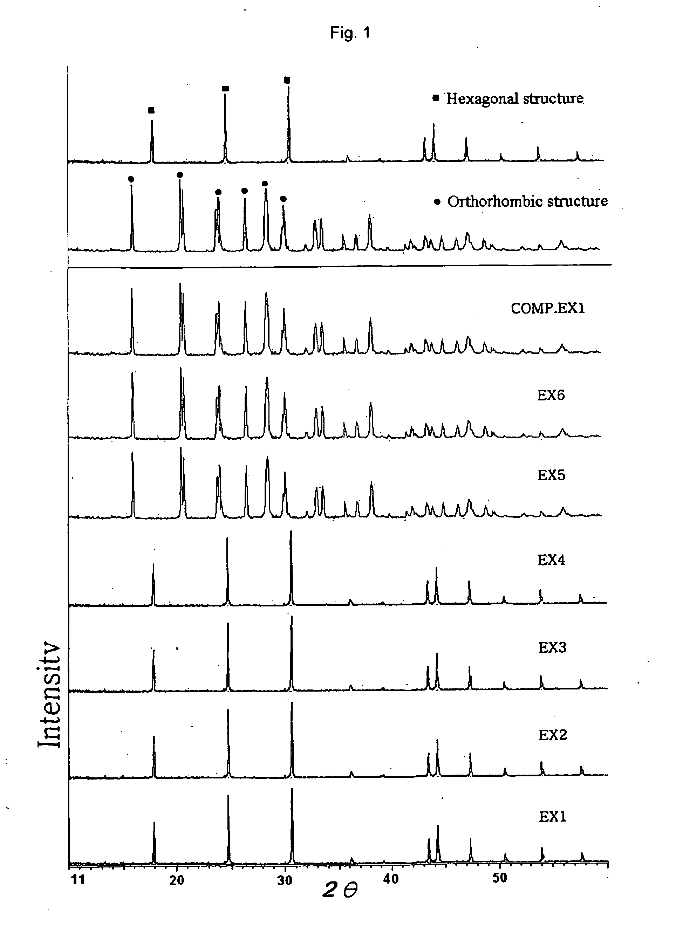

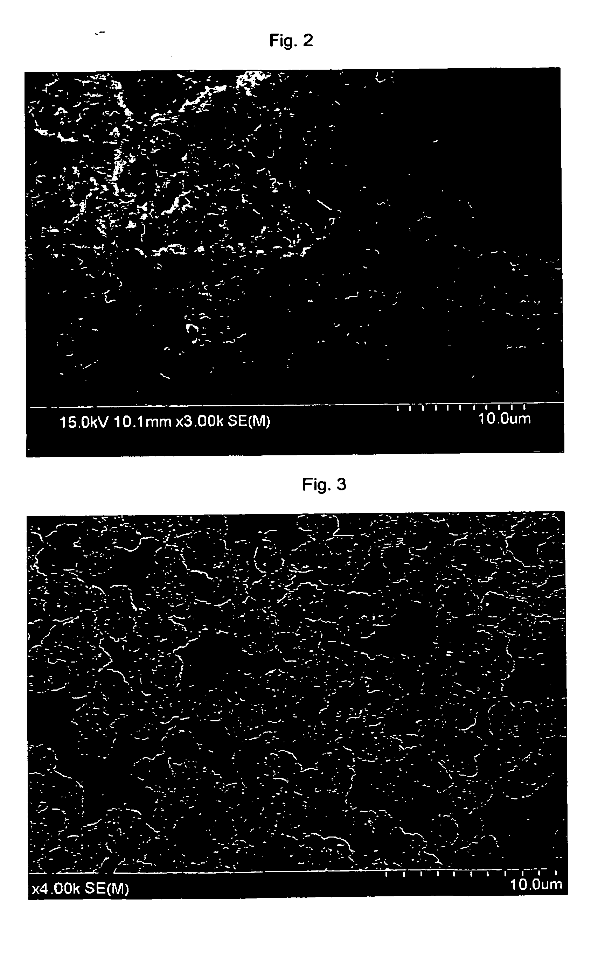

For the obtained cerium carbonate, XRD analysis and SEM analysis were conducted, and the results were shown in Figs. 1 and 2, respectively. From these results, it was confirmed that orthorhombic and hexagonal cerium carbonate powders were prepared.

And, the section in which a temperature maintains constantly during the temperature elevation was assumed as a urea decomposition reaction temperature, which was measured and shown in the following Table 1.

And, final yield of cerium carbonate was measured and shown in the following Table 1.

### Examples 2~6

Except that the equivalence ratio of cerium nitrate and urea, elevation temperature and the addition of nitric acid were changed, cerium carbonate was prepared by the same method as Example 1. As the nitric acid, a 63% nitric acid aqueous solution was used.

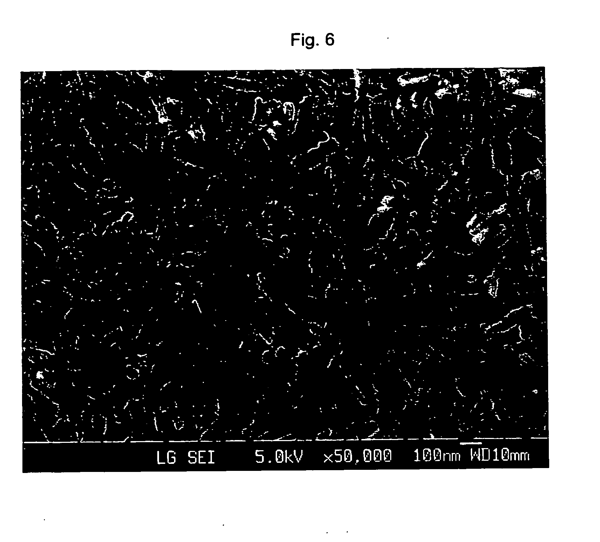

For each of the obtained cerium carbonate, XRD analysis was conducted, and the results were shown in Fig. 1 and related data were shown in the following Table 1. And, for each of the obtained cerium carbonate prepared in Examples 2-5, SEM analysis was conducted and the results were shown in Figs. 3-6, respectively.

### Example 7

Except that reaction temperature was controlled to 100°C and reaction time was controlled to 3 hours under the reaction conditions as shown in the following Table 1, cerium carbonate was prepared by the same method as Example 1.

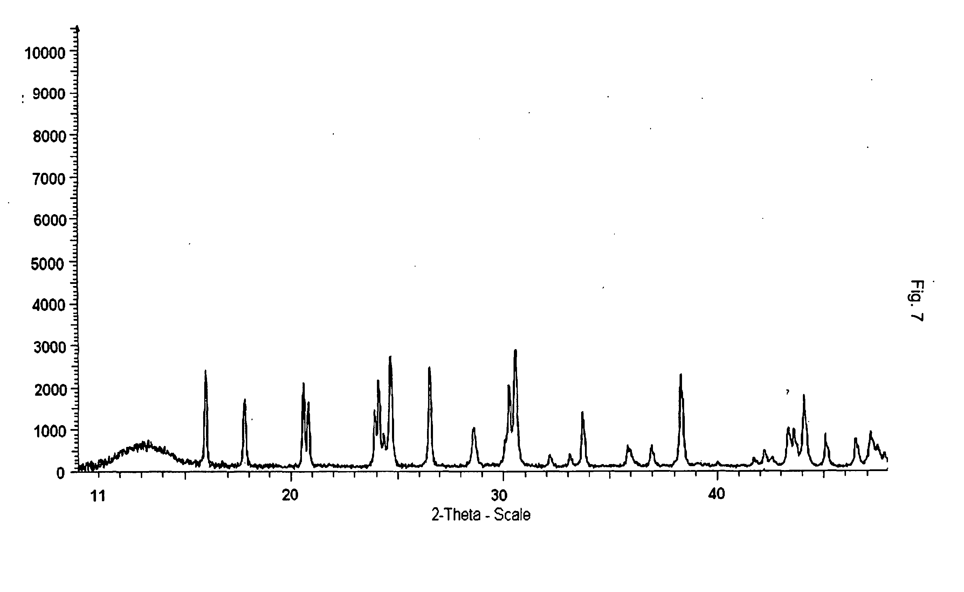

For the obtained cerium carbonate, XRD analysis was conducted, and the result was shown in Fig. 7 and the related data were shown in the following Table 1. Through the XRD analysis, etc., it was confirmed that the cerium carbonate of Example 7 is a mixture of orthorhombic cerium carbonate and hexagonal cerium carbonate comprising orthorhombic : hexagonal cerium carbonate in the volume ratio of 2.5 : 1.

### Example 8

Except that reaction temperature was controlled to 140°C and reaction time was controlled to 3 hours under the reaction conditions as shown in the following Table 1, cerium carbonate was prepared by the same method as Example 1.

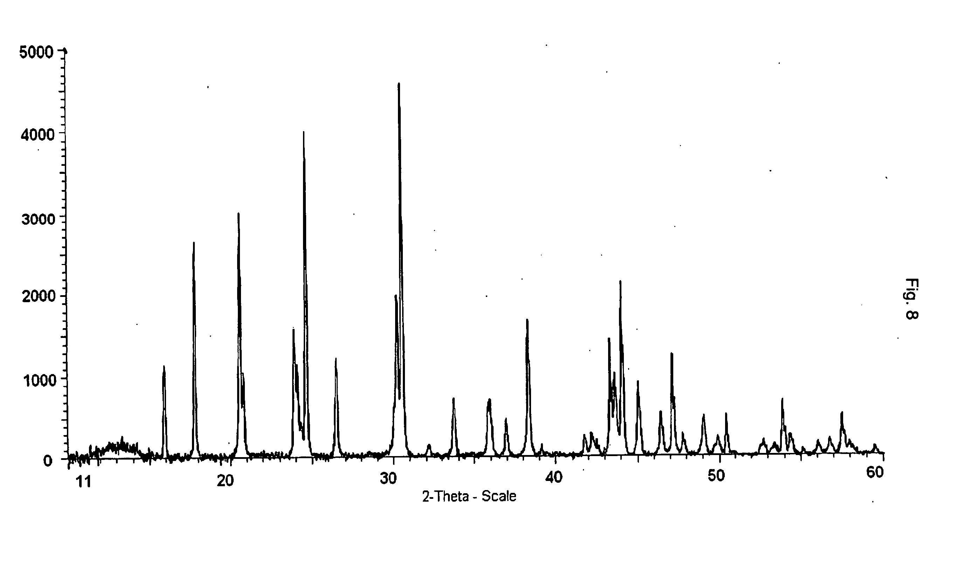

For the obtained cerium carbonate, XRD analysis was conducted, and the result was shown in Fig. 8 and the related data were shown in the following Table 1. Through the XRD analysis, etc., it was confirmed that that the cerium carbonate of Example 8 is a mixture of orthorhombic cerium carbonate and hexagonal cerium carbonate comprising orthorhombic : hexagonal cerium carbonate in the volume ratio of 3 : 5.

### Comparative Example 1

Under atmospheric pressure, 3 mol/L of cerium nitrate and 9 mol/L of urea were respectively dissolved in distilled water, and then, the two aqueous solutions were mixed and the mixed solution was reacted at 100°C for 12 hours.

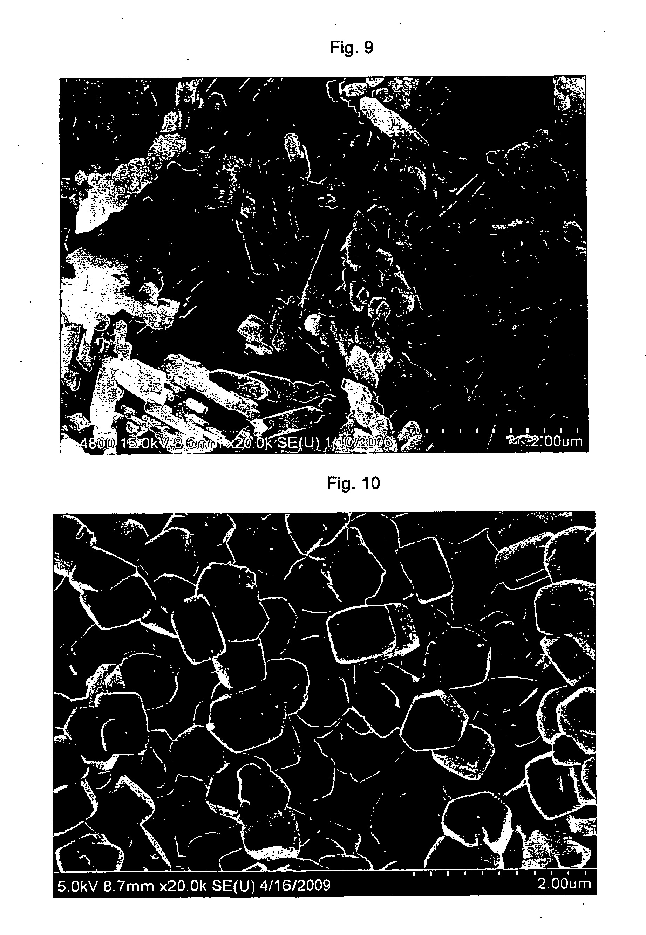

For the obtained cerium carbonate, XRD analysis was conducted to confirm that it is orthorhombic cerium carbonate, and SEM anaylsis was conducted and the result was shown in Fig. 9 and the related data were shown in the following Table 1.

### Comparative Example 2

Under 1 atm, 3 mol/L of cerium nitrate, 9 mol/L of urea were respectively dissolved in distilled water, and then, the two aqueous solutions were mixed and the mixed solution was reacted at 180°C for 2 hours. Since the product standard of the reactor is about 40 bar, a reaction pressure was controlled so as not to exceed 40 bar, and if it exceeds 40 bar, it was vented so that internal pressure may not exceed 40 bar. It was confirmed that, if not vented, about 90 bar or more of pressure is generated.

For the obtained cerium carbonate, XRD analysis was conducted to confirm that it was hexagonal cerium carbonate, and the result was shown in Fig. 10 and the related data were shown in the following Table 1.

**[Table 1]**

| | Cerium precursor | urea | Final elevation temperature | Nitric acid | Reaction pressure (atm) | Crystal structure of cerium carbonate | Urea decomposition temperature | Yield |
|---|---|---|---|---|---|---|---|---|
| example 1 | 43.4g | 18g (3eq.) | 140 °C | - | 1 | Hexagonal | 90 °C | 95-99% |
| example 2 | 43.4g | 72g (10 eq.) | 140 °C | - | 1 | Hexagonal | 90 °C | 95-99% |
| example 3 | 43.4g | 18g (3 eq.) | 140 °C | 9.8g (1 eq.) | 1 | Hexagonal | 80 °C | 95-99% |
| example 4 | 848g | 360g (1.5 eq.) | 100 °C | 98g (0.5 eq.) | 1 | Hexagonal | 50 °C | 95-98% |
| example 5 | 43.4g | 6g (1 eq.) | 140 °C | - | 1 | orthorhombic | 90 °C | 95-99% |
| example 6 | 43.4g | 18g(3 eq.) | 100 °C | - | 1 | Orthorhombic | 90 °C | 95-98% |
| example 7 | 43.4g | 18g (3 eq.) | 100 °C | - | 1 | orthorhombic : hexagonal (2.5:1) | 90 °C | 95-98% |
| example 8 | 43.4g | 18g (3 eq.) | 140 °C | - | 1 | orthorhombic : hexagonal (3: 5) | 90 °C | 95~99% |
| Comparative example 1 | 3 mol/L | 9 mol/L | 100 °C | - | 1 | Orthorhombic | 90 °C | 80-85% |
| Comparative example 2 | 3 mol/L | 9 moVL | 180°C | - | 40 bar or more | hexagonal | 90 °C | 80-85% |

| | | | | | | | | |
|---|---|---|---|---|---|---|---|---|
| * eq.: equivalents | | | | | | | | |

As results of the experiments, it was confirmed that cerium carbonate can be prepared by reacting a cerium precursor and urea even under solvent free condition, and that it can be prepared with higher yield under solvent free condition compared to preparation on the basis of a solvent such as water. It was also confirmed that the crystal structure, etc. of cerium carbonate can be easily controlled by controlling the equivalence ratio of cerium precursor and urea, elevation temperature, reaction time or the amount of nitric acid, even under relatively low pressure.

To the contrary, referring to Comparative Examples 1 and 2, it was confirmed that, in case cerium carbonate is prepared on the basis of solvent such as water, yield of cerium carbonate is not high, and especially in case preparation of hexagonal cerium carbonate is required, a reaction pressure becomes too high for high temperature reaction thus making it difficult to control the crystal structure of cerium carbonate.

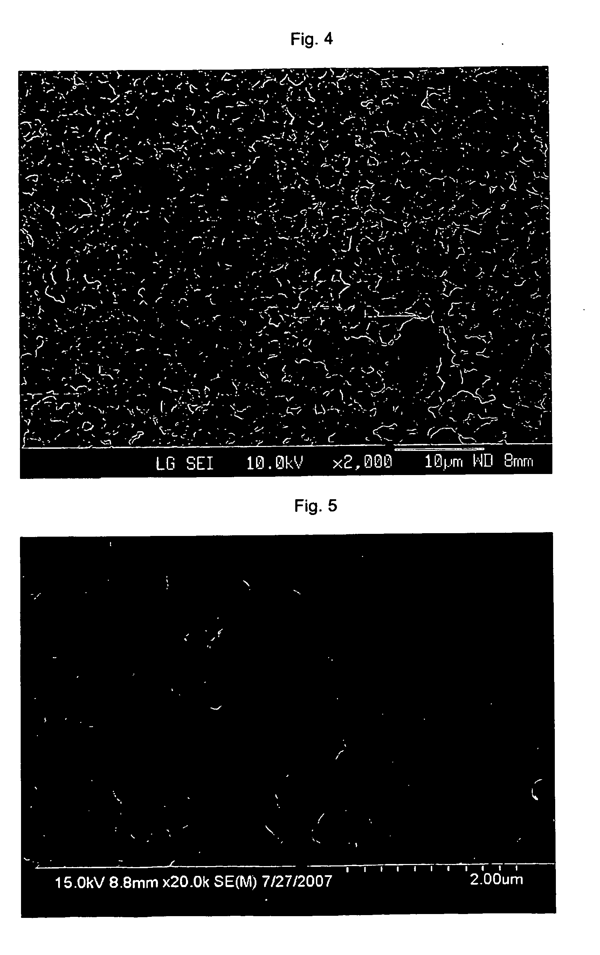

And, the experiment results of Examples 3 and 4 showed that in case nitric acid is added to cerium precursor and urea, an urea decomposition temperature becomes lower and cerium carbonate can be prepared with more uniform size (Refer to Figs. 4 and 5).

### <Preparation of cerium oxide> (outside the scope of the claims)

### Example 9

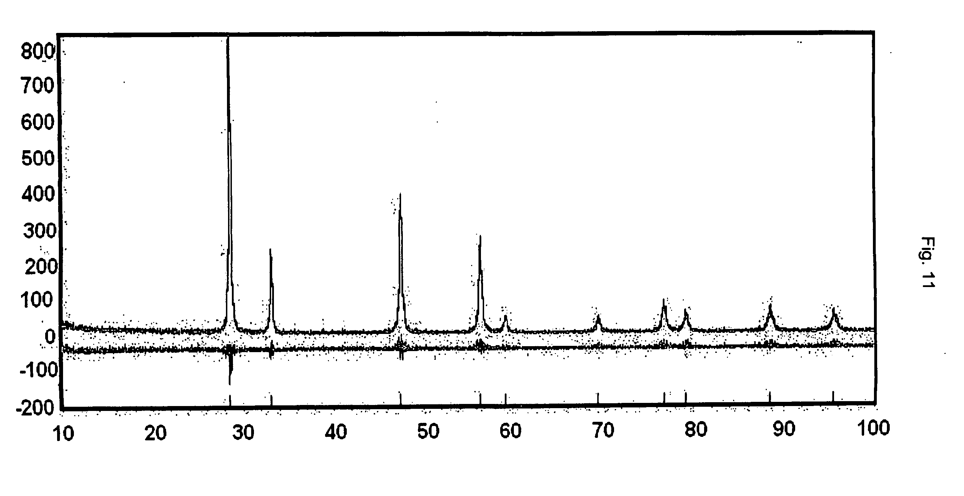

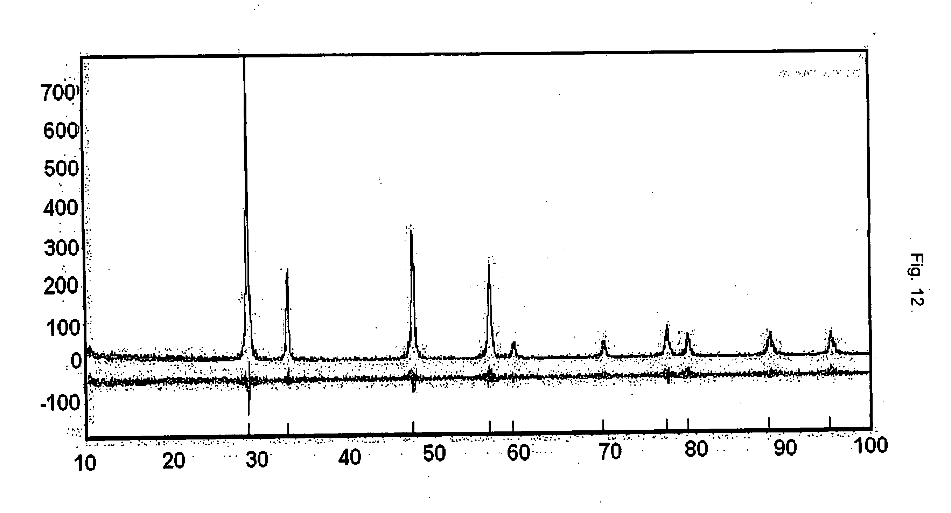

Cerium carbonate prepared in the above Examples 1 and 5 were heated at 900°C for 2 hours to prepare cerium carbonate powders, which was analyzed using XRD and the results were shown in Figs. 11 and 12. From these results, it was confirmed that the cerium carbonate was changed to cerium oxide.

## Claims

1. A method for preparing cerium carbonate comprising the steps of:
(a) mixing a cerium precursor and urea to produce a mixture; and
(b) elevating the temperature of the mixture to 50 ~ 250°C under solvent free conditions to have the cerium precursor and urea react,
wherein during the steps of mixing and reacting the cerium precursor and urea, no solvent is added to the mixture.

2. The method according to claim 1, wherein the cerium precursor and urea in step (a) are in a solid state.

3. The method according to claim 1, wherein the cerium precursor is at least one selected from cerium nitrate, cerium sulfate, cerium chloride or cerium ammonium salt.

4. The method according to claim 1, wherein the reaction between the cerium precursor and urea is conducted under pressure of 1~2 atm.

5. The method according to anyone of claims 1 to 4, wherein an equivalent ratio of the cerium precursor and urea in the mixture is 1 : 0.5 - 1 : 10.

6. The method according to anyone of claims 1 to 4, wherein the cerium precursor and urea are reacted for 0.5∼60 hours.

7. The method according to anyone of claims 1 to 4, wherein the mixture in step (a) further comprises nitric acid.

## Patentansprüche

1. Verfahren zum Herstellen von Cercarbonat, welches die Schritte umfasst:
(a) Mischen einer Cervorstufe und Harnstoff, um eine Mischung herzustellen; und
(b) Erhöhen der Temperatur der Mischung auf 50-250°C unter lösungsmittelfreien Bedingungen zur Umsetzung der Cervorstufe und des Harnstoffs,
wobei während der Schritte des Mischens und des Umsetzens der Cervorstufe und des Harnstoffs kein Lösungsmittel zu der Mischung hinzugegeben wird.

2. Verfahren nach Anspruch 1, wobei die Cervorstufe und der Harnstoff in Schritt (a) in einem festen Zustand sind.

3. Verfahren nach Anspruch 1, wobei die Cervorstufe wenigstens eine ist ausgewählt aus Cernitrat, Cersulfat, Cerchlorid oder Cerammoniumsalz.

4. Verfahren nach Anspruch 1, wobei die Reaktion zwischen der Cervorstufe und Harnstoff unter Druck von 1-2 atm durchgeführt wird.

5. Verfahren nach einem der Ansprüche 1 bis 4, wobei ein Äquivalentverhältnis der Cervorstufe und des Harnstoffs in der Mischung 1:0,5 - 1:10 ist.

6. Verfahren nach einem der Ansprüche 1 bis 4, wobei die Cervorstufe und der Harnstoff für 0,5-60 Stunden umgesetzt werden.

7. Verfahren nach einem der Ansprüche 1 bis 4, wobei die Mischung in Schritt (a) ferner Salpetersäure umfasst.

## Revendications

1. Procédé de préparation de carbonate de cérium comprenant les étapes consistant à :
(a) mélanger un précurseur de cérium et de l'urée afin de produire un mélange ; et
(b) augmenter la température du mélange jusqu'à 50 à 250° C sous des conditions sans solvant pour obtenir une réaction du précurseur de cérium et de l'urée,
dans lequel durant les étapes de mélange et de réaction du précurseur de cérium et de l'urée, aucun solvant n'est ajouté au mélange.

2. Procédé selon la revendication 1, dans lequel le précurseur de cérium et l'urée de l'étape (a) sont à l'état solide.

3. Procédé selon la revendication 1, dans lequel le précurseur de cérium est au moins sélectionné parmi le nitrate de cérium, le sulfate de cérium, le chlorure de cérium ou le sel d'ammonium du cérium.

4. Procédé selon la revendication 1, dans lequel la réaction entre le précurseur de cérium et l'urée est réalisée sous une pression de 1 à 2 atm.

5. Procédé selon l'une quelconque des revendications 1 à 4, dans lequel un rapport équivalent du précurseur de cérium et de l'urée dans le mélange est de 1 : 0,5 à 1 : 10.

6. Procédé selon l'une quelconque des revendications 1 à 4, dans lequel on fait réagir le précurseur de cérium et l'urée pendant 0,5 à 60 heures.

7. Procédé selon l'une quelconque des revendications 1 à 4, dans lequel le mélange à l'étape (a) contient en outre de l'acide nitrique.
